# EUROPEAN PATENT APPLICATION

(11) **EP 3 919 800 A1**
(43) Date of publication of application: **08.12.2021**
(21) Application number: 20785158.5
(22) Date of filing: 03.03.2020
(51) Int. Cl.: F16M 11/08, H04N 5/225

(54) **ROTATABLE LIFTING CAMERA AND DISPLAY DEVICE**

(30) Priority: 29.03.2019 CN 201910250047
(71) Applicant: Oneplus Technology (Shenzhen) Co., Ltd., Shenzhen, Guangdong 518000 (CN)
(72) Inventor: ZHANG, Yong, Shenzhen, Guangdong 518042 (CN); CHEN, Yuzhou, Shenzhen, Guangdong 518042 (CN); HUANG, Xiaodong, Shenzhen, Guangdong 518042 (CN); YU, Yajun, Shenzhen, Guangdong 518042 (CN); HU, Jin, Shenzhen, Guangdong 518042 (CN); YANG, Yong, Shenzhen, Guangdong 518042 (CN); HUANG, Shunming, Shenzhen, Guangdong 518042 (CN)
(74) Representative: Manitz Finsterwald Patent- und Rechtsanwaltspartnerschaft mbB
(86) International application number: PCT/CN2020/077529
(87) International publication number: WO 2020/199825

(57) **Abstract**

Provided are a rotatable lifting camera and a display device. The rotatable lifting camera comprises a camera module (10) and a drive assembly (20), wherein, the drive assembly (20) comprises a drive member (21), a transmission member (22), an execution member (23), a limiting member (25) and a locking member (24); the camera module (10) is arranged on the execution member (23); a non-rotation sliding fit section and a rotatable fit section are formed between the execution member (23) and the limiting member (25); when the execution member (23) and the limiting member (25) are located at the non-rotation sliding fit section, the drive member (21) can drive the execution member (23) to linearly move in a reciprocating way through the transmission member (22); when the execution member (23) and the limiting member (25) are located at the rotatable fit section, the locking member (24) locks the relative rotation between the transmission member (22) and the execution member (23), so that the drive member (21) drives the camera module (10) to rotate. The display device comprises the rotatable lifting camera, which is a rotatable lifting camera capable of automatically lifting and rotating in sections with a single power source and double actions, and a display device with a camera that can be extended and retracted relative to the display screen and can be rotated after being extended.

## Description

### CROSS-REFERENCE TO RELATED APPLICATION

This application is based upon and claims priority to Chinese patent application No. 201910250047.6 filed on March 29, 2019, the contents of which are hereby incorporated by reference in its entirety.

### TECHNICAL FIELD

The present application relates to the field of camera devices, and in particular to a rotatable and retractible camera and a display device.

### BACKGROUND

At present, a camera is mainly divided into two categories, that is, a camera of fixed type and a camera of movable type. The camera of fixed type is mainly fixed on a product and directly captures objects. The camera of movable type is generally divided into a camera of manually movable type and a camera of automatically movable type. The position and angle of the camera of manually movable type need to be controlled through actions such as twisting and pressing. The position and angle of the camera of automatically movable type may be automatically adjusted through a motor or other manner.

The camera on household appliances and electronic devices is usually fixedly arranged on a frame at a side provided with a screen. With the development of a full screen application, the household appliances and electronic devices begin to be provided with a retractible camera, but a capturing angle of the camera may not be automatically adjusted.

### SUMMARY

For this purpose, in order to overcome the defects in the related art, the present application provides a rotatable and retractible camera which is capable of automatically extending and retracting and rotating in a segmented manner and has a single power source and double actions, and a display device with the camera which is extendable and retractible relative to a display screen and which is rotatable after the camera extends out of the display screen.

The present application provides a first technical solution as follows.

A rotatable and retractible camera includes a camera assembly, a driving assembly and a limiting member. The driving assembly includes a driving member, a transmission member, an executing member and a locking member. The driving member is configured to drive the executing member to perform reciprocating rectilinear movement parallel to a rotating shaft of the driving member through the transmission member.

The camera assembly is arranged on the executing member, and the executing member and the limiting member cooperate with each other to form a non-rotatable sliding cooperation section and a rotatable cooperation section.

When the executing member and the limiting member cooperate with each other through the non-rotatable sliding cooperation section, the driving member drives the executing member to perform the reciprocating rectilinear movement through the transmission member.

When the executing member and the limiting member cooperate with each other through the rotatable cooperation section, the locking member locks a relative rotation of the transmission member and the executing member, so that the driving member drives the camera assembly into rotation.

As a further optional technical solution of the rotatable and retractible camera, the transmission member or the executing member is provided with a limiting part, and when the executing member and the transmission member are in contact with each other through the limiting part, the executing member reaches an extreme position from a moving position on the transmission member.

As a further optional technical solution of the rotatable and retractible camera, when the camera assembly extends to the extreme position, the locking member locks the relative rotation of the transmission member and the executing member.

As a further optional technical solution of the rotatable and retractible camera, the transmission member and the executing member cooperate with each other by screwing, the driving member drives the transmission member into rotation, and the executing member performs the reciprocating rectilinear movement relative to the transmission member.

As a further optional technical solution of the rotatable and retractible camera, the executing member and the limiting member cooperate with each other through a slider and a groove. The groove includes a strip-shaped groove section and an arc-shaped groove section. When the slider is in the strip-shaped groove section, the executing member and the limiting member cooperate with each other through the non-rotatable sliding cooperation section. When the slider is in the arc-shaped groove section, the executing member and the limiting member cooperate with each other through the rotatable cooperation section.

As a further optional technical solution of the rotatable and retractible camera, at least one side edge of the arc-shaped groove section and at least one side edge of the strip-shaped groove section are transitioned through an inclined surface.

As a further optional technical solution of the rotatable and retractible camera, the transmission member is a screw rod, the executing member is a nut cooperating with the screw rod, the locking member is a friction sheet arranged on the screw rod, and the friction sheet is clamped between the screw rod and the nut to lock rotation of the screw rod and the nut.

As a further optional technical solution of the rotatable and retractible camera, the rotatable and retractible camera further includes a controller, a sensor and a sensing component. The controller is electrically connected with the sensor and the driving member. The sensing component is arranged on the executing member, and the sensing component is rotatable with rotation of the executing member. The sensor senses a rotation angle of the executing member through the sensing component. The controller controls an action of the driving member according to the rotation angle sensed by the sensor.

The present application provides a second technical solution as follows.

A display device includes a display screen and the rotatable and retractible camera as described above. The camera assembly is extendable and retractible relative to the display screen, and is rotatable after the camera assembly extends out of the display screen.

As a further optional technical solution of the display device, the display screen is a mobile phone screen, a computer screen, a camera screen, a washing machine screen, a refrigerator screen or a television screen.

The rotatable and retractible camera and the display device of the present application at least have the following advantages.

The limiting member limits the executing member, so that the executing member is slidable and rotatable on the limiting member in a segmented manner. The locking member limits the executing member and the transmission member in the rotational section of the limiting member, so that the transmission member may drive the executing member into rotate. The camera assembly may have a linear action and a rotation action by adopting one rotation driving device, the two actions are independently carried out in a segmented manner. The rotatable and retractible camera is small in size, simple in moving mechanism, high in reliability, low in cost and simple to control, and has a single power source and double actions.

According to the display device, the rotatable and retractible camera is arranged, so that the camera assembly is concealable relative to the display screen. Therefore, when the camera is not used, the camera is concealed in the mechanism, privacy leakage is avoided, and the product appearance is also more concise. When the camera needs to be used, the camera extends for camera capturing. When the camera capturing view angle needs to be adjusted, the camera may be rotated for adjusting the view angle, and the display device is concise in appearance, good in confidentiality and large in camera capturing angle.

In order to make the purposes, features and advantages of the present application become more apparent and easier to understand, the present application will be described below with preferred embodiments and drawings in detail.

### BRIEF DESCRIPTION OF THE DRAWINGS

In order to describe the technical solutions in the embodiments of the present application more clearly, the drawings required to be used in descriptions about the embodiments will be simply introduced below. It is to be understood that the drawings described below are only some embodiments of the present application and are therefore not to be considered limiting of scope, and other drawings may further be obtained by those skill in the art according to these drawings without creative work.
FIG. 1 illustrates a schematic axonometric diagram of a rotatable and retractible camera according to a first embodiment of the present application.
FIG. 2 illustrates a schematic cross-sectional diagram of the rotatable and retractible camera according to the first embodiment of the present application, in which a camera assembly is in a retracted state.
FIG. 3 illustrates a schematic diagram of a groove of a limiting member of the rotatable and retractible camera according to the first embodiment of the present application.
FIG. 4 illustrates a schematic cross-sectional diagram of the rotatable and retractible camera according to the first embodiment of the present application, in which the camera assembly is in an extended state.
FIG. 5 illustrates an enlarged partial schematic diagram of FIG. 4.
FIG. 6 illustrates a partial schematic diagram of a display device according to a second embodiment of the present application, in which a camera assembly is in a retracted state.
FIG. 7 illustrates a partial schematic diagram of the display device according to the second embodiment of the present application, in which the camera assembly is in an extended state.
FIG. 8 illustrates a partial schematic diagram of the display device according to the second embodiment of the present application, in which the camera assembly rotates countercl ockwi se.
FIG. 9 illustrates a partial schematic diagram of the display device according to the second embodiment of the present application, in which the camera assembly rotates clockwise.

### DETAILED DESCRIPTION

In order to facilitate an understanding of the present application, a more complete description of a rotatable and retractible camera and a display device will now be made with reference to the associated drawings. Preferred embodiments of the rotatable and retractible camera and the display device are shown in the drawings. However, the rotatable and retractible camera and display device may be realized in many different forms and are not limited to the embodiments described herein. Instead, the embodiments are provided so that a more thorough and complete understanding of the content of the rotatable and retractible camera and display device is provided.

It is be to noted that when an element is referred to as being "fixed" to another element, it may be directly on said another element or there may be an intermediate element. When an element is referred to as being "connected" to another element, it may be directly connected to said another element or there may be an intermediate element. Instead, when an element is referred to as being "directly on" another element, there is no intermediate element. As used herein, the terms "vertical", "horizontal", "left", "right", and similar expressions are only adopted for description.

Unless defined otherwise, all technical and scientific terms used herein have the same meaning as commonly understood by those skilled in the art to which this present application belongs. The terms used in the specification of the rotatable and retractible camera and display device herein is for the purpose of describing the specific embodiments only and is not intended to be limiting of the present application. As used herein, the term "and/or" includes any and all combinations of one or more of the associated listed items.

### First Embodiment

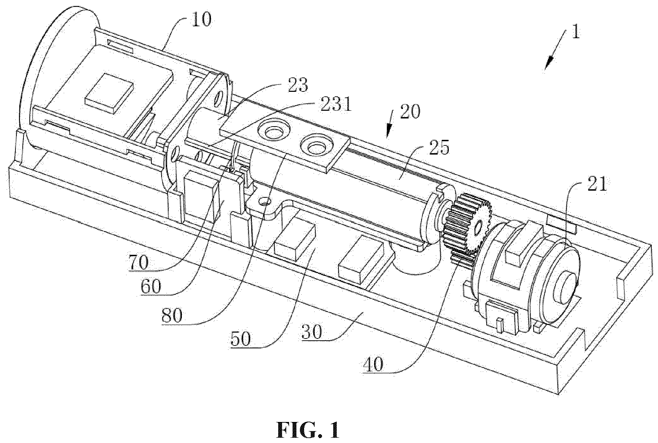

As shown in FIG. 1, the present application provides a rotatable and retractible camera 1. The rotatable and retractible camera 1 may be used independently and also is suitable for a device provided with a camera. The rotatable and retractible camera 1 is retractible and rotatable in a segmented manner, and is suitable for a display screen provided with a concealable camera. The rotatable and retractible camera 1 includes a camera assembly 10 and a driving assembly 20.

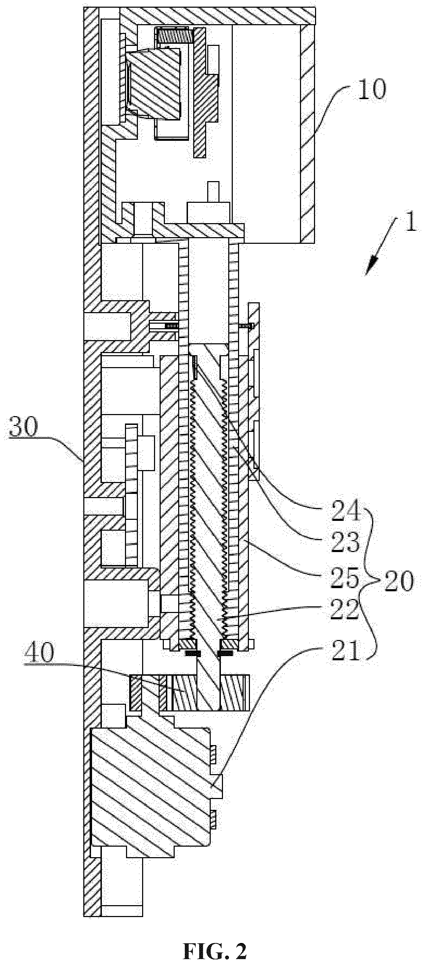

Referring to FIG. 2, the driving assembly 20 includes a driving member 21, a transmission member 22, an executing member 23, a locking member 24 and a limiting member 25. The driving member 21 is configured to drive the executing member 23 to perform reciprocating rectilinear movement parallel to a rotating shaft of the driving member 21 through the transmission member 22. The camera assembly 10 is arranged on the executing member 23. The executing member 23 and the limiting member 25 cooperate with each other to form a non-rotatable sliding cooperation section and a rotatable cooperation section. When the executing member 23 and the limiting member 25 cooperate with each other through the non-rotatable sliding cooperation section, the driving member 21 drives the executing member 23 to perform the reciprocating rectilinear movement through the transmission member 22. When the executing member 23 and the limiting member 25 cooperate with each other through the rotatable cooperation section, the locking member 24 locks a relative rotation of the transmission member 22 and the executing member 23, so that the driving member 21 drives the camera assembly 10 into rotation.

As described above, the locking member 24 and the limiting member 25 are equivalent to limiting parts. The limiting member 25 cooperates with the executing member 23 to limit the rotation of the executing member 23, that is, the rotation of the camera assembly 10. The locking member 24 locks the relative rotation of the transmission member 22 and the executing member 23 to limit the movement of the executing member 23, that is, the movement of the camera assembly 10. When the limiting member 25 limits the rotation of the executing member 23, the executing member 23 is rotatable relative to the transmission member 22, so that the executing member 23, namely, the camera assembly 10, is slidable and retractible on the limiting member 25. When the limiting member 25 relieves the limitation on the rotation of the executing member 23, the locking member 24 limits the relative rotation of the executing member 23 and the transmission member 22, so that the executing member 23, namely, the camera assembly 10, is independently rotatable, and further, the camera assembly 10 is independently retractible or rotatable.

The camera assembly 10 is a video and image input device and includes a housing, a lens, a photosensitive component, an optical filter, an integrated circuit, a connector and other parts. Camera assemblies 10 of different types are selected according to different applications of the rotatable and retractible camera 1, existing assemblies with standard specifications may be adopted as the camera assembly 10, and details are not described herein again.

The driving assembly 20 is an assembly capable of independently performing reciprocating rectilinear action or rotation action, and the action of the driving assembly 20 is embodied by the executing member 23. The camera assembly 10 is arranged on the executing member 23 and performs the same and synchronous action with the executing member 23.

The driving member 21 may be a rotation motor. In the case that the camera assembly is large in size, the driving member 21 may be a rotation power part such as a rotation air cylinder and a hydraulic motor.

The driving member 21 drives the transmission member 22 into rotation, the transmission member 22 inputs rotation movement, and the transmission member 22 and the executing member 23 cooperate with each other, so that the action output by the executing member 23 is executing movement. Therefore, the transmission member 22 and the executing member 23 form a mechanism for converting rotation movement into rectilinear movement, and the direction of the rectilinear movement is parallel to an axis of the rotation motion.

The transmission member 22 may also adopt a gear pair structure. A bevel gear switching transmission shaft and a gear rack structure are adopted for rectilinear driving. In the case of the transmission structure, the rotation movement of the executing member 23 is eccentric rotation, the limiting member 25 and the locking member 24 are gears in the gear pair, and the converting between the rectilinear movement and the rotation movement is realized through engagement and disengagement between the gears.

In the embodiment, the transmission member 22 and the executing member 23 cooperate with each other by screwing. The driving member 21 drives the transmission member 22 into rotation, and the executing member 23 performs the reciprocating rectilinear movement relative to the transmission member 22. The screwed cooperation of the transmission member 22 and the executing member 23 may enable the executing member 23 to perform rectilinear movement coinciding with the rotating shaft of the rotation motion. On one hand, the structure of the driving assembly 20 is more compact, and on the other hand, the camera assembly 10 may concentrically rotate along one shaft when rotating, and thus the rotating camera capturing effect is optimized.

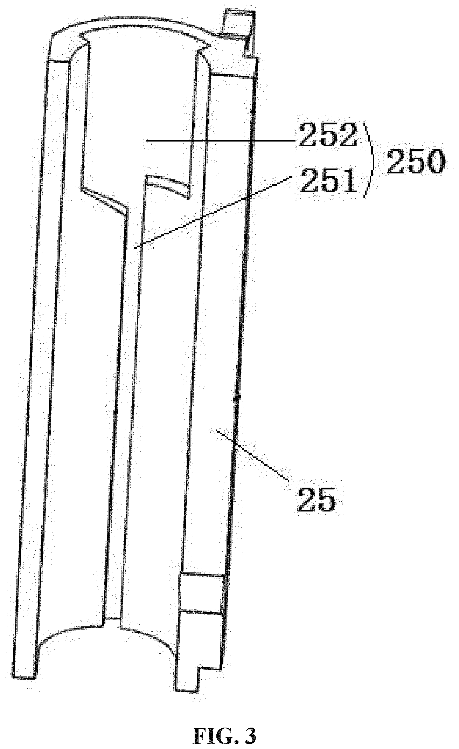

As shown in FIG. 3, the executing member 23 and the limiting member 25 cooperate with each other through a slider 231 and a groove 250. The groove 250 includes a strip-shaped groove section 251 and an arc-shaped groove section 252. When the slider 231 is in the strip-shaped groove section 251, the executing member 23 and the limiting member 25 cooperate with each other through the non-rotatable sliding cooperation section. When the slider 231 is in the arc-shaped groove section 252, the executing member 23 and the limiting member 25 cooperate with each other through the rotatable cooperation section.

Further, the transmission member 22 is a screw rod, and the executing member 23 is a nut cooperating with the screw rod. The nut is in a form of a sleeve, or an internal thread is partially arranged on the inner diameter of the sleeve to form the nut, so that the screwed length of the transmission member 22 and the executing member 23 is shortened, the driving force of the driving member 21 is reduced, and the probability of jamming between the executing member 23 and the transmission member 22 is reduced.

The limiting member 25 is a sleeve and is arranged around the executing member 23. The slider 231 is a boss arranged on a surface of the executing member 23. The groove 250 is formed in an inner wall of the limiting member 25, and the strip-shaped groove section 251 is a groove cooperating with the slider 231. When the slider 231 is embedded in the strip-shaped groove section 251, the executing member 23 is not rotatable relative to the limiting member 25, and therefore the executing member 23 is movable when the transmission member 22 rotates. The arc-shaped groove section 252 is an arc-shaped groove into which an end face of the executing member 23 is inserted, so that the executing member 23 has a certain rotation allowance in the limiting member 25, and the transmission member 22 may drive the executing member 23 into rotation.

The radian of the groove of the arc-shaped groove section 252 determines the rotation angle of the executing member 23, and the rotation range of the camera assembly 10 may be limited by setting the radian of the groove.

At least one side edge of the strip-shaped groove section 251 and at least one side edge of the arc-shaped groove section 252 are transitioned through an inclined surface. Each of the strip-shaped groove section 251 and the arc-shaped groove section 252 is provided with two side edges except for a groove bottom surface. Each of the two side edges of the arc-shaped groove section 252 is connected with a respective one of the two side edges of the strip-shaped groove section 251 due to the fact that the strip-shaped groove section 251 and the arc-shaped groove section 252 communicate with each other. The arc-shaped groove section 252 and the strip-shaped groove section 251 are transitioned through the inclined surface, so that the boss of the executing member 23 may smoothly slide into the strip-shaped groove section 251 from the arc-shaped groove section 252, and thus a situation of the jamming between the executing member 23 and the limiting member 25 is effectively prevented.

In the embodiment, one side edge of the arc-shaped groove section 252 and one side edge of the strip-shaped groove section 251 are transitioned through an inclined surface, and the other side edge of the arc-shaped groove section 252 and the other side edge of the strip-shaped groove section 251 are transitioned through a right-angle step. In the case that the slider 231 slides into the strip-shaped groove section 251 after the slider 231 of the executing member 23 rotates to the side edge transitioned through the inclined surface, the camera assembly 10 retracts.

The central plane of the strip-shaped groove section 251 between the two side edges coincides with the central plane of the arc-shaped groove section 252 between the two side edges, so that the rotatable angle of the executing member 23 in a clockwise direction is the same as the rotatable angle of the executing member 23 in an anticlockwise direction when the executing member 23 rotates. In the embodiment, the radian of the strip-shaped groove section 251 is 90 degrees, that is, the rotation angle of the camera assembly 10 is 90 degrees, and is rotatable in a range from -45 degrees to 45 degrees. Of course, the angle may also be set otherwise as desired.

It is to be noted that the groove of the arc-shaped groove section 252 may be an annular groove, that is, the rotation angle of the executing member 23 is not limited, thus the camera assembly 10 may rotate at 360 degrees. The arc-shaped groove section 252 may also not be arranged, so that the slider 231 of the executing member 23 extends completely over the limiting member 25, and thus the limiting of the limiting member 25 on the rotation of the executing member 23 is eliminated.

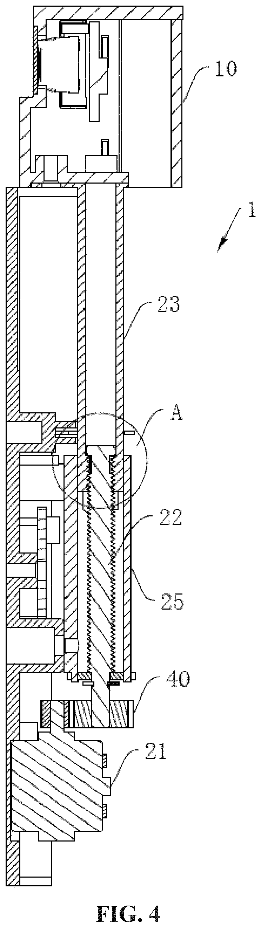

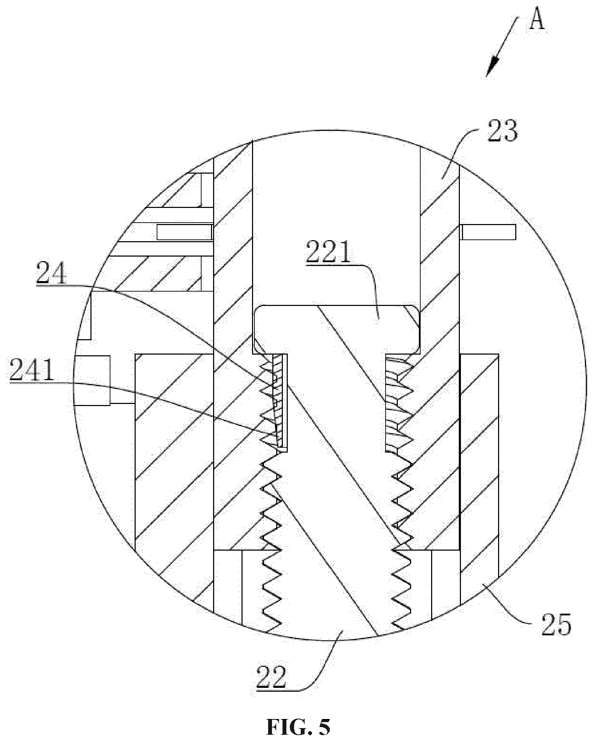

Referring to FIGS. 4 and 5, in the embodiment, the locking member 24 is a friction sheet arranged on the screw rod. When the executing member 23 and the limiting member 25 form rotatable cooperation, the friction sheet is clamped between the screw rod and the nut. The relative rotation of the screw rod and the nut is locked by increasing the friction force between the screw rod and the nut, so that the nut rotates with the rotation of the screw rod.

Further, an annular groove is formed in the screw rod, the friction sheet may be sheet-shaped. The groove is formed in the screw rod, and the friction sheet is arranged in the groove, so that the friction sheet is clamped between the screw rod and the nut. Of course, the friction sheet may also be annular and may be arranged around the annular groove. The outer diameter of the friction sheet is matched with the small diameter of a threaded hole of the nut, so that the friction sheet may be clamped between the nut and the screw rod.

In order to enable the locking member 24 to be clamped between the screw rod and the nut more easily, have a larger clamping area and improve the locking reliability of the screw rod and the nut, a guide part 241 may also be arranged on the locking member 24. The guide part 241 is a conical surface/inclined surface arranged on the locking member 24, so that when the friction sheet is engaged with the nut, the cooperation of the friction sheet and the nut are gradually transitioned to interference fit from clearance fit to realize clamping.

Of course, in order to prevent jamming between the friction sheet and the nut, a guide part 241 may also be arranged at the exiting end of the friction sheet. That is, each of the entering end and the exiting end of the friction sheet is provided with the guide part 241, so that engagement and disengagement between the friction sheet and the nut more smooth.

The friction sheet may be made of a material softer than the nut, such as copper and plastic. The friction sheet in the embodiment is made of nylon, nylon has good wear resistance, and a good clamping effect may still be kept after multiple times of friction.

The transmission member 22 or the executing member 23 is provided with a limiting part 221. When the executing member 23 and the transmission member 22 are in contact with each other through the limiting part 221, the executing member 23 reaches an extreme position from a moving position on the transmission member 22. The extreme position is the extending extreme or the retracting extreme. The limiting part 221 is configured to limit the relative movement position of the transmission member 22 and the executing member 23, prevent the executing member 23 from being separated from the transmission member 22, and limit the extending/retracting position of the executing member 23.

In the embodiment, the limiting part 221 is arranged on the transmission member 22 and configured to limit the extending extreme position of the executing member 23. In order to enable the structure of the driving assembly 20 to be more compact, the retracting extreme position of the executing member 23 is limited by an end cover of the limiting member 25.

When the transmission member 22 is a screw rod, the limiting part 221 on the transmission member 22 may be a boss arranged at the end of the screw rod, an unthreaded hole section of the nut cooperates with the boss, and the hole diameter of the unthreaded hole section is larger than that of the threaded hole of the nut. When the transmission member 22 and the executing member 23 move to the position where the boss abuts against shoulders of the threaded hole and the unthreaded hole, the extending of the executing member 23 is limited. When the executing member 23 retracts until the end face of the executing member 23 abuts against the end cover of the limiting member 25, the end cover of the limiting member 25 limits the executing member 23 from continuing to retract.

When the executing member 23, namely, the camera assembly 10 extends to the extreme position, the locking member 24 locks the relative rotation of the transmission member 22 and the executing member 23. Therefore, the executing member 23, namely the camera assembly 10, is rotatable after extending to the extreme position, the independence of the retractible action and the rotatable action is better, so that when the locking realized by the locking member 24 is unreliable, the relative movement of the transmission member 22 and the executing member 23 is effectively avoided.

In the embodiment, the rotatable and retractible camera 1 further includes a base 30, the driving member 21 is fixed to the base 30 through a support, and the limiting member 25 is connected to the base 30 for fixation. A speed reducing mechanism 40 is arranged between the driving member 21 and the transmission member 22. Further, the speed reducing mechanism 40 is a gear speed reducing mechanism 40. Different transmission effects are achieved by adjusting the transmission ratio of a gear, the output torsion of the driving member 21 is increased by arranging the gear speed reducing mechanism 40, and the output rotating speed of the driving member 21 is reduced. Further, the influence of the rotation angle of the driving member 21on the angle precision of rotation driving is reduced, the power of the driving member 21 is stronger, and the angle output precision is higher.

As described above, when the driving member 21 drives the camera assembly 10 to extend and retract, the driving member 21 rotates continuously, and a rotating direction during the extending is opposite to a rotating direction during the retracting. When the driving member 21 drives the camera assembly 10 into rotation, the rotation of the camera assembly 10 and the rotation of the driving member 21 are synchronous and identical. If the camera assembly 10 needs to rotate in a reciprocating manner, the driving member 21 also needs to rotate in a reciprocating manner. The rotation angle of the driving member 21 may be automatically controlled through a preset program, or the position of the camera assembly 10 may also be sensed through a sensing device, so that the driving member 21 is controlled.

In the embodiment, the rotatable and retractible camera 1 further includes a controller 50, a sensor 60 and a sensing component 70. The controller 50 is electrically connected with the sensor 60 and the driving member 21. The sensing component 70 is arranged on the executing member 23, and the sensing component 70 is rotatable with the rotation of the executing member 23. The sensor 60 senses a rotation angle of the executing member 23 through the sensing component 70, and the controller 50 controls an action of the driving member 21 according to the rotation angle sensed by the sensor 60. In other words, when the sensor 60 senses that the executing member 23 rotates to be engaged with the side edge of the arc-shaped groove section 252, the sensor 60 sends feedback to the controller 50. The controller 50 controls the driving member 21 into a reverse rotation, so that automatic control over reciprocating rotation of the camera assembly 10 is realized.

Furthermore, the sensing component 70 and the executing member 23 form slidable non-rotatable cooperation. The executing member 23 is in the form of a sleeve, and the slider 231 is arranged on the surface of the executing member 23. The sensing component 70 is in an annular shape, and is rotatably embedded in the base 30. The sensing component 70 is arranged around the executing member 23, and a recess cooperating with the slider 231 is formed in the sensing component 70. The sensing component 70 is rotatable with the rotation of the executing member 23 but is not movable with the movement of the executing member 23. Therefore, the rotation angle of the executing member 23, namely, the rotation angle of the camera assembly 10 may be reflected through the rotation angle of the sensing component 70.

The sensor 60 may be an infrared sensor 60. When the executing member 23 rotates to be engaged with the side edge of the arc-shaped groove section 252 of the limiting member 25, the sensing component 70 is driven to block infrared rays emitted by the sensor 60. Therefore, it is judged that the executing member 23 rotates to reach the extreme position of the arc-shaped groove section 252, and the controller 50 may send a signal for reversing or stopping rotation to the driving member 21.

In other embodiments, the sensor 60 may be a 3D Hall element, and the sensing component 70 may be a component used in conjunction with the 3D Hall element, so that the sensor 60 senses the rotation angle of the executing member 23, and thus the rotation angle of the camera assembly is judged.

The rotatable and retractible camera 1 further includes a wire protection cover 80. Due to the fact that the sensing component 70 is sheet-shaped, a cable of the camera assembly 10 is prone to being cut. The wire protection cover 80 is arranged above the limiting member 25 and the sensing component 70 to block the sensing component 70, so that the cable is protected.

As described above, the extending principle of the camera assembly 10 is as follows. The driving member 21 rotates to drive the transmission member 22 into rotation. The slider 231 of the executing member 23 is in the strip-shaped groove section 251 of the limiting member 25, so that the rotation of the executing member 23 is limited, and the executing member 23 drives the camera assembly 10 to move upwards. The driving member 21 continues to rotate, the executing member 23 continues to extend, and the locking member 24 is gradually clamped between the transmission member 22 and the executing member 23. When the executing member 23 abuts against the limiting part 221 of the transmission member 22, the executing member 23 moves to the extending extreme position, the locking member 24 is completely clamped between the executing member 23 and the transmission member 22, the slider 231 of the executing member 23 is in the arc-shaped groove section 252 of the limiting member 25, and the driving member 21 stops rotating.

The rotating principle of the camera assembly 10 is as follows. When the camera assembly 10 extends to the extreme position, the driving member 21 rotates to drive the transmission member 22 into rotation, and the transmission member 22 drives the executing member 23 into rotation through the locking member 24, so that the camera assembly 10 may be controlled to rotate by controlling the rotation of the driving member 21. The range of the rotation angle of the camera assembly 10 is determined by the radian of the arc-shaped groove section 252, the rotation angle of the driving member 21 may be set in advance through the radian of the arc-shaped groove section 252, and the feedback of the angle of the executing member 23 may also be automatically controlled through the sensor 60.

The retracting principle of the camera assembly 10 is as follows. The driving member 21 rotates in the direction opposite to the rotating direction during the extending, to drive the transmission member 22 into rotation. The transmission member 22 drives the executing member 23 into rotation through the locking member 24, so that the slider 231 of the executing member 23 abuts against the side edge of the arc-shaped groove section 252. Said side edge is the side edge transitioned through the inclined surface, and the executing member 23 may not continue to rotate. The driving member 21 continues to drive the transmission member 22 into rotation, so that the locking member 24 is gradually separated from the executing member 23, and the executing member 23 gradually slides into the strip-shaped groove section 251 through the inclined surface. The driving member 21 continues to drive the transmission member 22 into rotation, so that the executing member 23 continues to retract. When the executing member 23 retracts to a position where the end face of the executing member 23 abuts against the end cover of the limiting member 25, the executing member 23 retracts to the extreme position, and the driving member 21 stops rotating.

### Second Embodiment

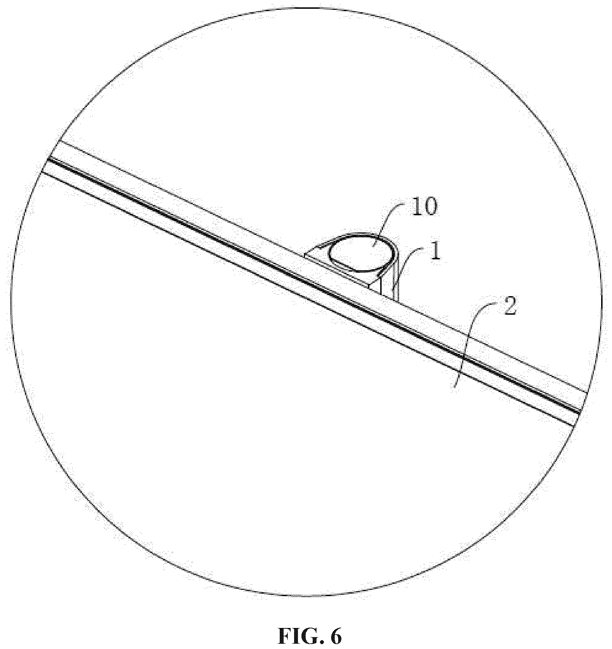

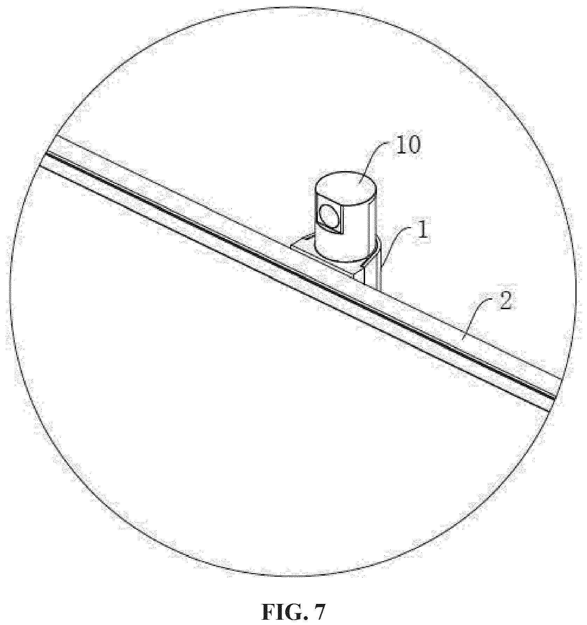

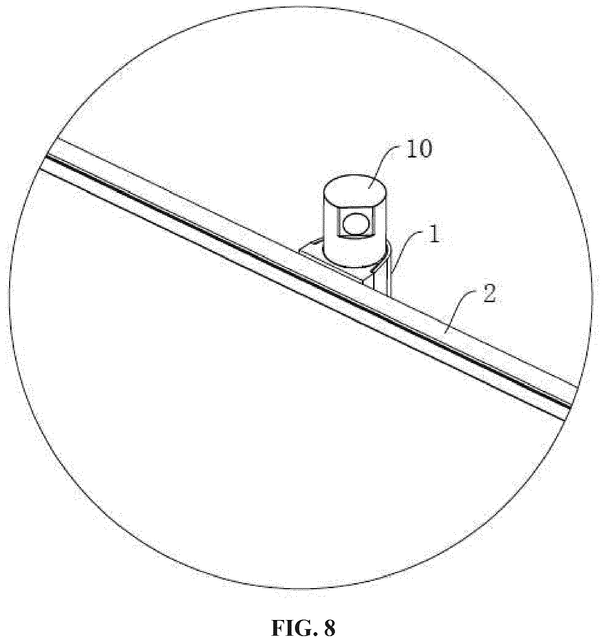

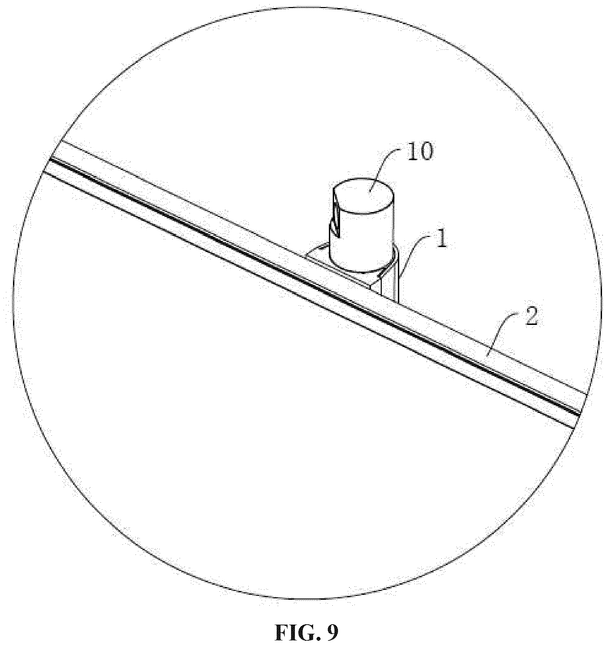

Referring to FIG. 6 to FIG. 9, the embodiment of the present application provides a display device. The display device includes a display screen 2 and a rotatable and retractible camera 1 in the first embodiment. The rotatable and retractible camera 1 is fixed to the display screen 2 through the base 30. The camera assembly 10 is extendable or retractible relative to the display screen 2 and is rotatable after the camera assembly 10 extends out of the display screen 2.

Therefore, the rotatable and retractible camera 1 is a concealable camera and is rotatable after extending, and the setting of the action logic is very suitable for the concealable camera of the display device, so that the camera of the display device is concealable below/behind the display screen 2 and may have a larger camera capturing angle through rotation.

The camera assembly 10 is concealable inside when the camera is not used, so that privacy leakage is avoided, and the product appearance is also more concise. When the camera needs to be used, the camera assembly 10 extends, and a camera capturing target face of the camera assembly 10 is parallel to the display screen 2. When the view angle needs to be adjusted, the camera assembly 10 may rotate left and right to adjust the view angle.

The display screen 2 may be a screen of household appliances and consumer electronic products which may use cameras, such as a mobile phone screen, a computer screen, a camera screen or a television screen.

According to the embodiment, the display device is a television, the display screen 2 is a television screen, and the rotatable and retractible camera 1 is arranged behind the display screen 2. When the camera assembly 10 retracts to the extreme position, the top of the camera assembly 10 is not higher than the top surface of the display screen 2, so that the concealing effect is achieved.

In all of the examples shown and described herein, any particular value should be construed as exemplary only, and not as a limitation, and therefore other examples of the exemplary embodiments may have different values.

It should be noted that like reference numerals and letters in the following drawing represent similar items, and thus once an item is defined in one drawing, it needs not be further defined and explained in the following drawings.

The embodiments described above represent only several implementation modes of the present application, and the description thereof is specific and detailed, but should not be construed as limiting the scope of present application accordingly. It should be pointed out that those of ordinary skill in the art can also make some modifications and improvements without departing from the concept of the present application, and these modifications and improvements all fall within the scope of protection of the present application.

## Claims

1. A rotatable and retractible camera, comprising a camera assembly and a driving assembly, the driving assembly comprising a driving member, a transmission member, an executing member, a limiting member and a locking member, the driving member being configured to drive the executing member to perform reciprocating rectilinear movement parallel to a rotating shaft of the driving member through the transmission member,
the camera assembly is arranged on the executing member, and the executing member and the limiting member cooperate with each other to form a non-rotatable sliding cooperation section and a rotatable cooperation section,
when the executing member and the limiting member cooperate with each other through the non-rotatable sliding cooperation section, the driving member drives the executing member to perform the reciprocating rectilinear movement through the transmission member,
when the executing member and the limiting member cooperate with each other through the rotatable cooperation section, the locking member locks a relative rotation of the transmission member and the executing member, so that the driving member drives the camera assembly into rotation.

2. The rotatable and retractible camera of claim 1, wherein the transmission member or the executing member is provided with a limiting part, and when the executing member and the transmission member are in contact with each other through the limiting part, the executing member reaches an extreme position from a moving position on the transmission member.

3. The rotatable and retractible camera of claim 2, wherein when the camera assembly extends to the extreme position, the locking member locks the relative rotation of the transmission member and the executing member.

4. The rotatable and retractible camera of claim 1, wherein the transmission member and the executing member cooperate with each other by screwing, the driving member drives the transmission member into rotation, and the executing member performs the reciprocating rectilinear movement relative to the transmission member.

5. The rotatable and retractible camera of claim 4, wherein the executing member and the limiting member cooperate with each other through a slider and a groove, the groove comprises a strip-shaped groove section and an arc-shaped groove section, wherein when the slider is in the strip-shaped groove section, the executing member and the limiting member cooperate with each other through the non-rotatable sliding cooperation section, and when the slider is in the arc-shaped groove section, the executing member and the limiting member cooperate with each other through the rotatable cooperation section.

6. The rotatable and retractible camera of claim 5, wherein at least one side edge of the arc-shaped groove section and at least one side edge of the strip-shaped groove section are transitioned through an inclined surface.

7. The rotatable and retractible camera of claim 4, wherein the transmission member is a screw rod, the executing member is a nut cooperating with the screw rod, the locking member is a friction sheet arranged on the screw rod, and the friction sheet is clamped between the screw rod and the nut to lock rotation of the screw rod and the nut.

8. The rotatable and retractible camera of any of claims 1 to 7, wherein the rotatable and retractible camera further comprises a controller, a sensor and a sensing component, the controller is electrically connected with the sensor and the driving member, the sensing component is arranged on the executing member, the sensing component is rotatable with rotation of the executing member, the sensor senses a rotation angle of the executing member through the sensing component, and the controller controls an action of the driving member according to the rotation angle sensed by the sensor.

9. A display device, comprising a display screen and a rotatable and retractible camera according to any of claims 1 to 8, wherein the camera assembly is extendable or retractible relative to the display screen, and is rotatable after the camera assembly extends out of the display screen.

10. The display device of claim 9, wherein the display screen is a mobile phone screen, a computer screen, a camera screen, a washing machine screen, a refrigerator screen or a television screen.
